# EUROPÄISCHE PATENTSCHRIFT

(11) **EP 2 643 612 B1**
(45) Veröffentlichungstag und Bekanntmachung des Hinweises auf die Patenterteilung: **04.03.2015**
(21) Anmeldenummer: 11791209.7
(22) Anmeldetag: 18.11.2011
(51) Int. Cl.: F16F 9/58, F16F 9/38, F16F 9/32

(54) **DÄMPFER FÜR EIN KRAFTFAHRZEUG**
DAMPER FOR A MOTOR VEHICLE
AMORTISSEUR POUR UN VÉHICULE AUTOMOBILE

(30) Priorität: 26.11.2010 DE 102010052489; 25.05.2011 DE 102011102466
(43) Veröffentlichungstag der Anmeldung: 02.10.2013
(73) Patentinhaber: Volkswagen Aktiengesellschaft, 38436 Wolfsburg (DE)
(72) Erfinder: LOOF, Gerald, 38162 Cremlingen (DE); BRAS ANTONIO, Joao, 38547 Calberlah (DE)
(86) Internationale Anmeldenummer: PCT/EP2011/005813
(87) Internationale Veröffentlichungsnummer: WO 2012/069161

(56) Entgegenhaltungen:
- DD-A1- 52 970
- DE-A1-102006 046 560
- DE-A1-102009 016 210
- DE-B- 1 041 742
- DE-C- 808 323
- DE-C- 868 393
- FR-A- 1 028 667

## Beschreibung

Die vorliegende Erfindung bezieht sich auf einen Dämpfer für ein Kraftfahrzeug.

Die DE 10 2009 016 210 A1 offenbart einen Schwingungsdämpfer, welcher ein Behälterrohr, eine in das Behälterrohr eintauchende Kolbenstange und eine an dem Behälterrohr angebrachte Schutzkappe, durch welche sich die Kolbenstange erstreckt, umfasst. In der Schutzkappe ist ein Einlagekörper zum axialen Längenausgleich zwischen dem Behälterrohr und der Schutzkappe angeordnet.

Die DD 52 970 A1 betrifft einen Gleitschutz aus plastischem Werkstoff für Teleskoprohre und Schutzhülsen von Federbeinen und Stoßdämpfern an Kraftfahrzeugen.

Die DE 868 393 C beschreibt eine Führung und Dichtung eines Kolbens und einer Kolbenstange im Zylindergehäuse, welche durch einen äußeren Kolbenmantel aus elastisch nachgiebigem Stoff und eine in einer Zylinderstirnwand eingesetzte Buchse aus ebensolchem Stoff für die herausgeführte Kolbenstange gekennzeichnet ist.

Die DE 10 2006 046560 A1 beschreibt eine Luftfeder mit einem einen veränderbaren Luftraum begrenzenden und abschnittsweise auf einem Abrollkolben unter Bildung einer Balgschlaufe abrollbaren Rollbalg und einer im Wesentlichen zylindrischen Balg-Führung. Dabei ist die Balg-Führung teleskopartig längenveränderlich ausgebildet und besteht aus zwei koaxial zueinander angeordneten Führungselementen.

Die FR 1 028 667 A offenbart einen teleskopartigen Dämpfer.

Die DE 808 323 C beschreibt eine Teleskopgabel, bei welcher Lager- und Gleitbuchsen durch entsprechende, im Stand- bzw. Schieberohr vorhandene Aussparungen festgehalten werden.

Die DE 10 41 742 B offenbart eine Abdichtung von Teleskopstoßdämpfern, bei welchen zwischen einem Schutzrohr und einem Arbeitsrohr Abdichtringe vorhanden sind.

Dämpfer werden meist in Kombination mit einer Federung beispielsweise an den Fahrwerken von Kraftfahrzeugen eingesetzt, um Schwingungen von gefederten Massen schnell abklingen zu lassen. Dabei verbindet der Dämpfer beispielsweise eine Achskonstruktion eines Rades mit der Karosserie des Fahrzeuges. Bei hydraulischen Dämpfern wird ein Kolben über eine Kolbenstange in einem ölbefüllten Zylinder geführt. Bei axialer Bewegung des Kolbens gegenüber dem Zylinder muss das Öl durch enge Kanäle und/oder Ventile im Kolben strömen. Durch diese Strömung entsteht ein Widerstand, durch welchen die zu absorbierende Schwingungsenergie letztlich in eine Erwärmung des Öls umgewandelt wird.

Bekannt ist es, bei Dämpfern für ein Fahrwerk eines Kraftfahrzeugs sogenannte Schutzrohre einzusetzen, da die Dämpfer bedingt durch ihre Einbaulage erheblichen Umwelteinflüssen ausgesetzt sind. Ein Schutzrohr kann am Kolbenstangenende so angeordnet sein, dass die Kolbenstange und zumindest teilweise das Dämpferrohr davon bedeckt ist. Die Schutzrohre verhindern oder verringern die Möglichkeit der Verschmutzung der empfindlichen Oberfläche der Kolbenstange des Dämpfers. Sie schützen den Dämpfer bzw. die Kolbenstange weiterhin vor Umwelteinflüssen (beispielsweise Salznebel in Küstenbereichen). Sofern eine seriell eingebrachte Zusatzfeder unter dem Schutzrohr zum Einsatz kommt, beispielsweise eine Feder aus elastomerem Material, kann auch diese vor Verunreinigungen und Umwelteinflüssen geschützt werden. Im Betrieb kommt es vor, dass das Schutz- oder Vollschutzrohr durch Vibrationen, durch Schwingungs- und (Ein-)Federvorgänge an den Dämpfer selbst anschlägt. Dies verursacht nach einer gewissen Anzahl von Anschlagvorgängen und ggf. in Verbindung mit zusätzlich vorhandener Verunreinigung an den Anschlagstellen, dass der Schutzlack des Dämpfers beschädigt, abgeschabt oder abgeschliffen wird. Diese Schädigung kann im folgenden zu Korrosionsvorgängen am Dämpfer führen, die die Lebensdauer des Dämpfers beeinflussen können.

Die DE 10 2007 021 385 A1 beschreibt das Anbringen von sogenannten Lagerelementen zur Zentrierung eines Schutzrohres eines Schwingungsdämpfers. Diese Lagerelemente sind spezielle axial verlaufende nach innen ausgebildete erhabene Flächen, welche direkt aus dem Material des Schutzrohres ausgeformt werden können. Auf diese Weise kann erreicht werden, dass bei Ein- und Ausfahrbewegungen des Schwingungsdämpfers nur die Lagerelemente mit einer Abdeckkappe des Schwingungsdämpfers, nicht aber mit dem Zylinderrohr des Schwingungsdämpfers in Berührung kommen. Hierfür kann zusätzlich das Schutzrohr konisch geformt sein, so dass sich der Radius des Schutzrohres mit zunehmendem Abstand von der Schutzrohrbefestigung vergrößert. Weiterhin kann das - üblicherweise aus dünnem Material gefertigte - Schutzrohr noch über eine oder mehrere in Umfangsrichtung verlaufende Sicken verstärkt werden, um die radiale Steifigkeit des Schutzrohres zu erhöhen.

Die Verwendung derartiger Lagerelemente erfordert allerdings eine starke Modifikation des Schutzrohres, wodurch dieses wiederum deutlich aufwändiger in der Herstellung ist. Insbesondere muss hierbei auch über die konstruktive Gestaltung des Schutzrohres gewährleistet sein, dass sich das Schutzrohr bei entsprechender mechanischer Beanspruchung nicht soweit verformt, dass es das Dämpferrohr oder den Kolben berühren kann. Weiterhin vergrößert sich durch die konische Formgebung des Schutzrohrs der Abstand zwischen Dämpfer und Schutzrohr mit zunehmender Entfernung vom Befestigungspunkt des Schutzrohres. Dies hat jedoch den Nachteil, dass durch den vergrößerten Spalt auch leichter Verunreinigungen an die Kolbenstange gelangen können.

Die DE 10 2006 010 332 A1 beschreibt spezielle Führungselemente, welche direkt in die Innenseite eines Schutzrohrs eines Dämpfers integriert sind. Diese Führungselemente können über den Umfang des unteren Endes des Schutzrohres verteilt sein und sollen aus einem elastischen, reibarmen Werkstoff hergestellt sein. Alternativ ist auch ein Führungselement beschrieben, welches als umlaufende O-Ring im Schutzrohr fixiert ist. Auf diese Weise soll verhindert werden, dass das Schutzrohr die Oberfläche des vom Schutzrohr überdeckten Dämpfers abschabt oder beschädigt. Allerdings kann diese Konstruktion nicht den Kontakt zwischen Schutzrohr und Dämpfer während der Einschwingvorgänge vollständig vermeiden. Ein weiterer Nachteil besteht darin, dass das Schutzrohr dergestalt modifiziert werden muss, dass die entsprechenden Führungselemente im Schutzrohr angebracht werden können.

Alternativ werden in der DE 44 23 442 A1 und im Gebrauchsmuster G 93 08 778.0 auch besonders starre und stabile Schutzrohre von Schwingungsdämpfern beschrieben, die sich auf Grund ihrer schweren massiven Konstruktion kaum verformen oder verbiegen lassen, so dass ein Reiben oder Anschlagen des Schutzrohres unwahrscheinlich ist. Allerdings müssen hierbei spezielle Schutzrohre gefertigt und eingesetzt werden, welche ein hohes Gewicht haben und einen hohen Materialaufwand erfordern.

Aufgabe der Erfindung ist es daher die Lebensdauer von Dämpfern zu verbessern. Insbesondere ist es die Aufgabe der vorliegenden Erfindung zu verhindern, dass das Schutzrohr im Betrieb an das Dämpferrohr anschlagen kann.

Erfindungsgemäß wird diese Aufgabe durch eine Vorrichtung zum Schutz eines Dämpfers nach Anspruch 1, durch einen Dämpfer nach Anspruch 5 und durch ein Verfahren nach Anspruch 7 gelöst. Die abhängigen Ansprüche definieren bevorzugte und vorteilhafte Ausführungsformen der vorliegenden Erfindung.

Im Rahmen der vorliegenden Erfindung wird eine Vorrichtung zum Schutz eines Dämpfers, welcher sich teleskopartig ineinander bewegende Elemente, (üblicherweise eine Kolbenstange und ein Dämpferrohr) sowie ein Schutzrohr enthält, bereitgestellt. Hierzu wird der Dämpfer mit einer Dämpferkappe ausgestattet, die Mittel zur Führung eines Schutzrohres aufweist, um ein Anschlagen des Schutzrohres im Betrieb zu reduzieren oder zu verhindern. Die Dämpferkappe schließt das Dämpferrohr am Ort der Austrittsöffnung der Kolbenstange ab und enthält daher eine zentrale Bohrung für die Kolbenstange. Die erfindungsgemäße Dämpferkappe weist dabei sich in axialer Richtung zwischen dem Dämpferrohr und dem Schutzrohr erstreckende Abstandselemente auf, an denen das Schutzrohr im Betrieb bei Bedarf entlanggleiten kann oder bei Vibrationen bei Bedarf anschlagen kann. Die Dimensionierung der Abstandselemente ist dabei so gewählt, dass ein mögliches Anschlagen des Schutzrohres weitestgehend verhindert wird. Die Abstandselemente sind als radialer Führungskäfig mit sich in axialer Richtung erstreckenden Streben ausgeführt, wobei die Streben am jeweiligen Ende der Strebe in einen umlaufenden Abschluss münden, der mit allen Streben verbunden ist.

Damit erhält die erfindungsgemäße Dämpferkappe eine zusätzliche Funktion gegenüber bisher verwendeten Dämpferkappen. Durch eine entsprechende Formgebung kann das Schutzrohr von der erfindungsgemäßen Dämpferkappe sicher so geführt werden, dass auch bei entsprechender mechanischer Verformung des Schutzrohres, diese nicht am Dämpferrohr anschlagen kann.

Vorteilhafterweise ist der Durchmesser des Führungskäfigs der Dämpferkappe in Richtung des (möglicherweise anschlagenden) Schutzrohres konstant oder ansteigend. Die neue erfindungsgemäße Dämpferkappe kann einteilig oder zumindest zweiteilig ausgebildet sein, nämlich im wesentlichen aus einem ersten Teil, nämlich einer bekannten Dämpferkappe (Basiskappe) sowie mit einem zweiten Teil, nämlich mit einem Führungskäfig, der die Abstandselemente zur Führung des Schutzrohres enthält. Dieser Führungskäfig kann an oder in die Basiskappe eingeschraubt oder dort verrastet werden kann. Der Führungskäfig kann auch angeklebt, angespritzt oder angeschweißt sein.

Der Führungskäfig wird dabei aus den Abstandselementen gebildet, die jeweils in einem Ring enden können. Vorzugsweise steigt der Außendurchmesser des Führungskäfigs mit zunehmendem Abstand von der Dämpferkappe an; d.h. der Abstand der Abstandselemente von der Rotationsachse des Führungskäfigs vergrößert sich mit zunehmender Entfernung von der Dämpferkappe. Auf diese Weise reduziert sich der Abstand zwischen dem Schutzrohr und dem Führungskäfig entsprechend mit zunehmendem Abstand von der Dämpferkappe.

Zusätzlich kann der Führungskäfig so ausgeführt sein, dass die Abstandselemente mit zunehmendem Abstand von der Dämpferkappe dünner werden um ein möglichst günstiges Verhältnis von eingesetztem Material zur Festigkeit des Führungskäfigs zu erzielen.

Die vorliegende Erfindung bietet folgende Vorteile:
- Die Erfindung ermöglicht den Einsatz von langen Schutzrohren, welche das Dämpferrohr und die Kolbenstange vor Verschmutzung schützen, wobei gleichzeitig ein Anschlagen oder Reiben des Schutzrohre am Dämpferrohr wirksam vermieden wird.
- Da die Erfindung wirksam ein Reiben des Schutzrohres am Dämpferrohr verhindert, können Beschriftungen oder Kodierungen am Dämpferrohr im vom Schutzrohr überdeckten Bereich angebracht werden, ohne im Lauf der Zeit beschädigt zu werden.
- Durch die Verwendung der erfindungsgemäßen Dämpferkappe können übliche Schutzrohre für Dämpfer, vorzugsweise aus dünnem und leichtem Material eingesetzt werden.
- Insbesondere, ist keine Modifikation der Schutzrohre erforderlich, um die vorliegende Erfindung einsetzen zu können.
- Befestigung und Montage der Dämpferkappe und des Schutzrohres müssen bei Einsatz der Erfindung nicht modifiziert werden.
- Gegenüber einem starren stabilen (beispielsweise aus Metall gefertigten) Schutzrohr kann durch die erfindungsgemäße Vorrichtung Gewicht und Material eingespart werden, da sowohl das Schutzrohr als auch die erfindungsgemäße Dämpferkappe auch bei relativ geringem Gewicht ihre Funktion erfüllen können.
- Insbesondere bei zweiteilig ausgeführter Dämpferkappe können leicht verschiedene Basiskappen mit unterschiedlichen Führungskäfigen kombiniert werden, um so an verschiedenen Dämpfern und/oder mit verschiedenen Schutzrohren eingesetzt werden zu können.
- Verhindert wirksam ein Reiben des Schutzrohres am Dämpferrohr beim Einsatz von Schutzrohren, die verschieden Durchmesser aufweisen und bei denen deshalb die Kappe beim Eintauchen in den Bereich des größeren Durchmessers des Schutzrohres die Führung nicht mehr gewährleistet.
- Verhindert wirksam ein Reiben des Schutzrohres am Dämpferrohr beim Einsatz von Schutzrohr-Dämpferanordnung mit unterschiedlichen Momentanpolen von Schutzrohr und Dämpferrohr und der dadurch bedingten nicht koaxialen Bewegung des Dämpferrohres zum Schutzrohr.

Die vorliegende Erfindung schützt den Dämpfer dadurch, dass ein Anschlagen oder Reiben des Schutzrohres am Dämpferrohr auch bei starker Beanspruchung oder bei Vibrationen vermieden wird. Dadurch wird verhindert, dass beispielsweise eine Schutzlackierung des Dämpfers durch das Schutzrohr geschädigt oder abgeschliffen wird, wodurch wiederum der Dämpfer leichter korrodieren würde und eine verkürzte Lebensdauer hätte.

Im Folgenden wird die vorliegende Erfindung anhand bevorzugter erfindungsgemäßer Ausführungsformen mit Bezug auf die Figuren im Detail beschrieben.

In Figur 1 ist ein Dämpfer mit Dämpferrohr und Schutzrohr dargestellt, in welchem die erfindungsgemäße Vorrichtung untergebracht werden kann.

Figur 2 zeigt ebenfalls einen Dämpfer, in welchem die erfindungsgemäße Vorrichtung untergebracht werden kann, jedoch mit einem veränderten Schutzrohr.

Figur 3 zeigt einen Dämpfer in welchem sich die erfindungsgemäße Vorrichtung zum Schutz des Dämpfers befindet.

Figur 4 zeigt eine Dämpferkappe an welche die erfindungsgemäßen Abstandselemente angebracht werden können.

Figur 5 zeigt eine bevorzugte Ausführungsform der erfindungsgemäßen Vorrichtung als Dämpferkappe mit Führungskäfigs.

Figur 6 zeigt eine weitere bevorzugte Ausführungsform der erfindungsgemäßen Vorrichtung als Dämpferkappe mit Führungskäfig.

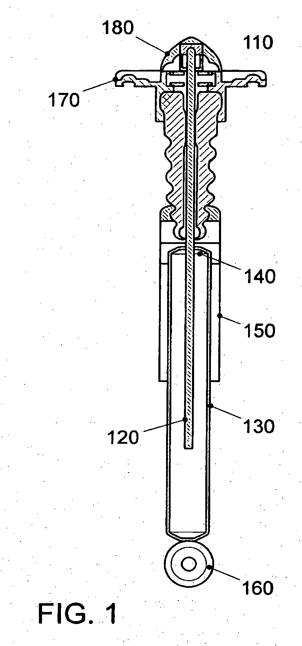

Figur 1 zeigt schematisch den Aufbau eines Dämpfers 110, wie er üblicherweise zur Dämpfung von Schwingungen bei Kraftfahrzeugen genutzt wird und in welchem die Vorrichtung der vorliegenden Erfindung eingesetzt werden kann. Der Dämpfer 110 wird einerseits über die Kolbenstange 120, welche mechanisch fest mit dem oberen Dämpferlager 170 verbunden ist, mit einem nicht dargestellten Teil der Fahrzeugkarosserie verbunden. Andererseits wird der Dämpfer 110 über das untere Dämpferlager 160 mit einer ebenfalls nicht dargestellten Achskonstruktion des Fahrzeugs verbunden. Entsprechend dem Verwendungszweck des Dämpfers 110 können sich diese beiden Befestigungspunkte gegeneinander und damit die Räder gegenüber der Karosserie bewegen. Zusätzlich werden Karosserie und Achskonstruktion üblicherweise über eine entsprechende Feder gestützt. Das obere, karosserieseitige Ende des Dämpfers 110 wird von einer Schutzkappe 180 abgeschlossen. Im Inneren des Dämpferrohrs 130 befindet sich ein dämpfungsmittelgefüllter Zylinder, in welchem ein nicht dargestellter Kolben beweglich aber gedämpft geführt wird. Der Kolben wiederum ist fest mit der Kolbenstange 120 verbunden. Die Kolbenstange tritt aus dem dämpfungsmittelgefüllten Zylinder durch eine Kolbenstangendichtungs-Führungseinheit aus, die einerseits die Kolbenstange führt und andererseits dafür sorgt, dass das Dämpfungsmittel nicht aus dem Zylinder austreten kann. Am karosserieseitigen Ende des Dämpfers 110 ist ein Schutzrohr 150 befestigt, welches einerseits die Kolbenstange 120 und andererseits einen Teil des Dämpferrohrs 130 bedeckt. Das Schutzrohr soll den Dämpfer 110 und insbesondere die Oberfläche des aus der Dämpferkappe herausragenden Teils der Kolbenstange 120 vor Verschmutzung und vor Umwelteinflüssen schützen. Gleichzeitig soll das Schutzrohr die Bewegungen der beiden Enden des Dämpfers 110 gegeneinander bei entsprechenden Schwingungsvorgängen des Dämpfers 110 nicht einschränken. Bei der Ausführungsform des Dämpfers 110 gemäß Figur 1 kann das Schutzrohr 150 bei starken Vibrationen und gleichzeitigen Federvorgängen des Dämpfers 110 am Dämpferrohr 130 anschlagen und beispielsweise die Lackierung abschaben und beschädigen.

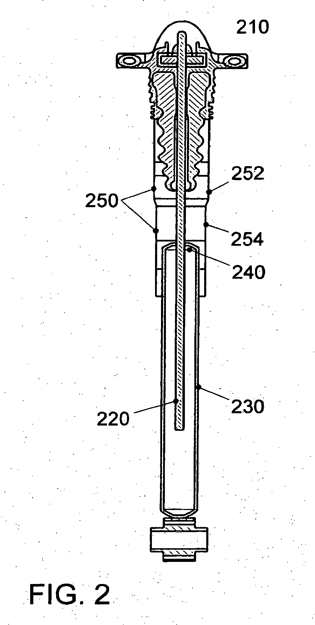

Figur 2 zeigt schematisch den Aufbau eines Dämpfers 210 mit einem veränderten Schutzrohr 250. Das Schutzrohr ist hier in zwei Bereiche 252 und 254 mit verschiedenen Durchmessern unterteilt. Der untere Teil 254 des Schutzrohres 250 hat hierbei einen geringeren Durchmesser, als in der Ausführungsform gemäß Figur 1. Durch diese Zweiteiligkeit kann der Spalt zwischen dem Dämpferrohr 230 und dem Schutzrohr 250 verkleinert werden, so dass weniger leicht Schmutz in den Zwischenraum eindringen kann und so die Kolbenstange 220 besser vor Verschmutzung geschützt wird. Ähnlich, wie beim Dämpfer nach Figur 1 ist auch hier eine Dämpferkappe 240 nach dem Stand der Technik dargestellt; allerdings kann auch hier die erfindungsgemäße Vorrichtung zum Schutz des Dämpfers eingesetzt werden. Der Außendurchmesser der Dämpferkappe 240 richtet sich nach dem Teil 254 mit dem kleineren Durchmesser des Schutzrohres 250. Deshalb wird beim Eintauchen des Dämpferrohrs 230 in den Teilbereich 252 des Schutzrohres 250 mit dem größeren Durchmesser das Schutzrohr 250 nicht mehr durch die Dämpferkappe 240 geführt. Durch die unterschiedlichen Momentanpole von Schutzrohr 250 und Dämpferrohr 230 und die dadurch bedingte nicht koaxiale Bewegung des Dämpferrohres 230 zum Schutzrohr 250 nähert sich das Schutzrohr 250 dem Dämpferrohr 230 beim Eintauchen soweit an, dass es im Extremfall kinematiktbedingt zur Berührung kommt.

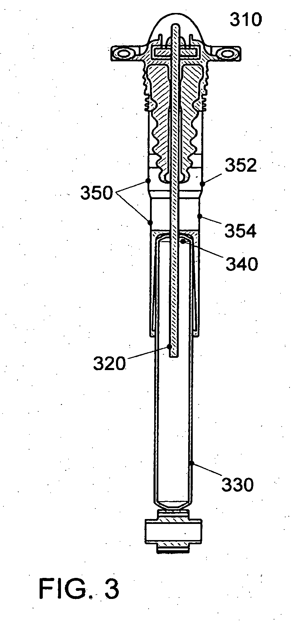

Figur 3 zeigt den Aufbau eines Dämpfers 310 mit einem Schutzrohr 350, wie es auch in Figur 2 dargestellt ist, wobei hier die neue Vorrichtung gemäß der vorliegenden Erfindung mit eingebaut ist. Entsprechend ist hier die Dämpferkappe 340 mit Abstandselementen ausgestattet, die einen Führungskäfig zwischen Dämpferrohr 330 und Schutzrohr 350 bilden und dadurch als eine Verlängerung der Dämpferkappe 340 wirken. In der Darstellung von Figur 2 ragt der Führungskäfig aus dem Schutzrohr heraus und verhindert ein Anschlagen oder Reiben des Schutzrohres 350 am Dämpferrohr 330. Die Dämpferkappe 340 realisiert nicht nur die Führung des Schutzrohrs 350 sondern bildet über einen weiten Einfederbereich eine mechanische Barriere zwischen Schutzrohr 350 und Dämpferrohr 330. Das Schutzrohr ist hier wie in Figur 2 in zwei Bereiche 352 und 354 mit verschiedenen Durchmessern unterteilt. Der untere Teil 354 des Schutzrohres 350 hat einen geringeren Durchmesser, als in der Ausführungsform gemäß Figur 1. Durch diese Zweiteiligkeit kann der Spalt zwischen dem Dämpferrohr 330 und dem Schutzrohr 350 verkleinert werden, so dass weniger leicht Schmutz in den Zwischenraum eindringen kann und so die Kolbenstange 320 besser vor Verschmutzung geschützt wird.

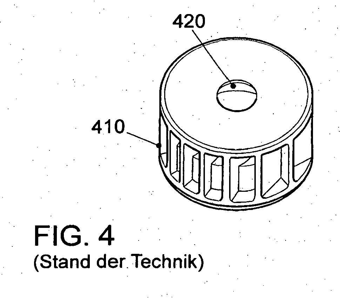

Figur 4 zeigt eine Dämpferkappe, wie sie einerseits üblicherweise nach dem Stand der Technik verwendet wird. Andererseits kann diese Kappe auch um die erfindungsgemäßen Abstandselemente zum Schutz des Dämpfers erweitert werden. Die Kappe 410 schließt das Dämpferrohr auf der Seite des Dämpfers ab, an welchem die Kolbenstange aus dem Dämpferrohr ragt. Entsprechend befindet sich in der Dämpferkappe eine Bohrung 420, durch welche die Kolbenstange des Dämpfers hindurch tritt.

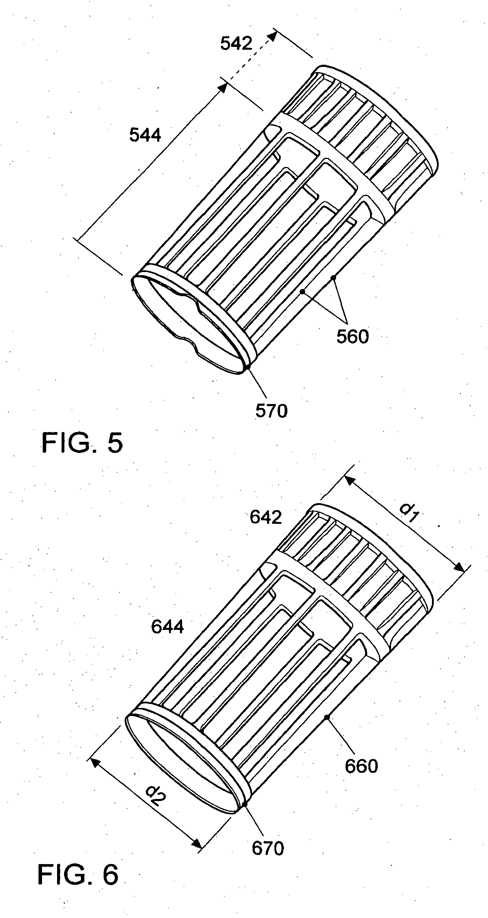

In Figur 5 ist eine bevorzugte Ausführungsform der erfindungsgemäßen Vorrichtung dargestellt. Die Dämpferkappe 542 enthält zusätzlich die Abstandselemente 560, welche als sich in axialer Richtung verlaufende Streben ausgeführt sein können und die an ihren jeweiligen Enden in einen ringförmigen Abschluss münden können. In Richtung der Dämpferkappe kann dieser ringförmige Abschluss direkt an der Dämpferkappe 542 liegen; in der entgegengesetzten Richtung bildet beispielsweise der Abschluss einen abschließenden Ring 570. Hierdurch entsteht ein Führungskäfig (Führungselement) 544 zum Schutz des Dämpfers. Wie in Figur 5 dargestellt, können die Abstandselemente 560 mit zunehmendem Abstand von der Dämpferkappe dünner werden um ein möglichst günstiges Verhältnis von eingesetztem Material zur Festigkeit des Führungskäfigs zu erzielen. Weiterhin kann der Zwischenraum zwischen den Abstandselementen 560 auch mit Material gefüllt sein, so dass der Führungskäfig 544 ein Rohr bildet, aus welchem die Abstandselemente herausragen können und eine Führung des Schutzrohres ermöglichen bzw. ein Anschlagen des Schutzrohres am Dämpferrohr verhindern. Die Kombination aus Dämpferkappe 542 und Führungskäfig 544 kann entweder wie in Figur 5 dargestellt aus einem Teil gefertigt sein oder sie kann alternativ zumindest zweiteilig ausgebildet sein. In diesem Fall besteht diese Kombination im wesentlichen aus einem ersten Teil, nämlich einer bekannten Dämpferkappe 542 und dem Führungskäfig 544, der die Abstandselemente 560 zur Führung des Schutzrohres enthält. Die Teile können miteinander verschraubt oder dort verrastet sein. Alternativ kann der Führungskäfig 544 auch an die Dämpferkappe 542 angeklebt, angespritzt oder angeschweißt sein.

In Figur 6 ist eine weitere bevorzugte Ausführungsform der erfindungsgemäßen Vorrichtung dargestellt. Auch hier enthält die Dämpferkappe 642 zusätzliche Abstandselemente 660, welche mit dem abschließenden Ring 670 zusammen den Führungskäfig 644 zum Schutz des Dämpfers bilden. Bei dieser bevorzugten Ausführungsform steigt der Durchmesser der Vorrichtung mit zunehmender Entfernung von der Dämpferkappe 642 (bzw. vom Ort der Befestigung der Dämpferkappe) in Richtung der Abstandselemente 644 (und damit auch in Richtung eines möglicherweise anschlagenden Schutzrohres) an. Dies bedeutet, dass insbesondere der Durchmesser d2 des beispielsweise abschließenden Ringes 670 des Führungskäfigs 544 größer ist als der Durchmesser d1 am Ort der Dämpferkappe 642. Auf diese Weise reduziert sich der Abstand zwischen dem Schutzrohr und dem Führungskäfig entsprechend mit zunehmendem Abstand von der Dämpferkappe 642. Der Abschluss muss nicht unbedingt ein Ring sein. Es könnten mehrer zusammenhängende Elemente oder einzelne Streben sein.

## Patentansprüche

1. Vorrichtung zum Schutz eines Dämpfers (310), umfassend
- ein Schutzrohr (350), welches an dem Dämpfer (310) befestigt ist,
- eine Dämpferkappe (340; 542; 642), zum Abschließen eines Dämpferrohrs (330) des Dämpfers (310), und
- mindestens zwei Abstandselemente (560; 660), welche an der Dämpferkappe (340; 542; 642) befestigt sind und sich in axialer Richtung radial innerhalb des Schutzrohres (350) erstrecken,
wobei die mindestens zwei Abstandselemente (560; 660) als sich in axialer Richtung erstreckende Streben ausgeführt sind, die an beiden Enden von einem Ring abgeschlossen werden und damit einen Führungskäfig (544; 644) bilden, und
wobei die mindestens zwei Abstandselemente (560; 660) so ausgeführt sind, dass das Schutzrohr (350) bei Betätigung des Dämpfers an ihnen derart entlanggleiten kann, dass ein Anschlagen oder Reiben des Schutzrohres (350) am Dämpferrohr (330) vermieden wird.

2. Vorrichtung nach Anspruch 1, **dadurch gekennzeichnet dass** die Dämpferkappe (542; 642) mit dem Führungskäfig (544; 644) verschraubbar ist.

3. Vorrichtung nach Anspruch 1, **dadurch gekennzeichnet dass** die Dämpferkappe (542; 642) mit dem Führungskäfigs (544; 644) verrastbar ist.

4. Vorrichtung nach Anspruch 1, **dadurch gekennzeichnet dass** die Dämpferkappe (542; 642) an den Führungskäfig (544; 644) angeklebt oder angespritzt ist.

5. Dämpfer (310), umfassend:
- einen Kolben, eine Kolbenstange (320) und
- ein Dämpferrohr (330),
wobei die Kolbenstange (320) axial beweglich in dem Dämpferrohr (330) angeordnet ist, **dadurch gekennzeichnet, dass** der Dämpfer (310) eine Vorrichtung nach einem der Ansprüche 1 bis 4 umfasst, wobei sich die Dämpferkappe (340; 542; 642) am Austrittsort der Kolbenstange (320) aus dem Dämpferrohr (330) befindet.

6. Dämpfer nach einem der vorhergehenden Ansprüche, **dadurch gekennzeichnet dass** der radiale Abstand zwischen dem Dämpferrohr und der Außenkante der mindestens zwei Abstandselemente (560; 660) mit zunehmender Entfernung von der Dämpferkappe (340; 542; 642) ansteigt.

7. Verfahren zur Herstellung einer Vorrichtung zum Schutz eines Dämpfers (110; 210; 310), wobei das Verfahren die folgenden Schritte umfasst:
- Fertigung einer Dämpferkappe (340; 542; 642) zum Abschließen eines Dämpferrohres (330) des Dämpfers,
- Fertigung eines Führungskäfigs (544; 644), welcher mindestens zwei sich in axialer Richtung erstreckende, als Streben ausgebildete Abstandselemente (560, 660) umfasst, welche an beiden Enden von einem Ring abgeschlossen werden und ausgelegt sind, sich in axialer Richtung zwischen einem Dämpferrohr (330) und einem Schutzrohr (350) des Dämpfers (310) zu erstrecken, und
- Verbinden von Dämpferkappe (340; 542; 642) und Führungskäfig (544; 644),
wobei die mindestens zwei Abstandselemente (560; 660) so ausgeführt werden, dass das Schutzrohr (350) bei Betätigung des Dämpfers an ihnen derart entlanggleiten kann, dass ein Anschlagen oder Reiben des Schutzrohres (350) am Dämpferrohr (330) vermieden wird.

8. Verfahren nach Anspruch 7, **dadurch gekennzeichnet dass** das Verbinden der Dämpferkappe (340; 542; 642) mit dem Führungskäfig (544; 644) über eine Verschraubung erfolgt.

9. Verfahren nach Anspruch 7, **dadurch gekennzeichnet dass** das Verbinden der Dämpferkappe (340; 542; 642) mit dem Führungskäfig (544; 644) über eine Verrastung erfolgt.

10. Verfahren nach Anspruch 7, **dadurch gekennzeichnet dass** das Verbinden der Dämpferkappe (340; 542; 642) mit dem Führungskäfig (544; 644) über eine Verschweißung erfolgt.

11. Verfahren nach Anspruch 7, **dadurch gekennzeichnet dass** das Verbinden der Dämpferkappe (340; 542; 642) mit dem Führungskäfig (544; 644) über eine Verklebung erfolgt.

## Claims

1. Apparatus for protecting a damper (310), comprising
- a protective tube (350) which is fastened to the damper (310),
- a damper cap (340; 542; 642), for closing a damper tube (330) of the damper (310), and
- at least two spacer elements (560; 660) which are fastened to the damper cap (340; 542; 642) and extend radially within the protective tube (350) in the axial direction,
the at least two spacer elements (560; 660) being configured as struts which extend in the axial direction, are closed by a ring at both ends and therefore form a guide cage (544; 644), and the at least two spacer elements (560; 660) being configured in such a way that, upon actuation of the damper, the protective tube (350) can slide along on them in such a way that impact or rubbing of the protective tube (350) on the damper tube (330) is avoided.

2. Apparatus according to Claim 1, **characterized in that** the damper cap (542; 642) can be screwed to the guide cage (544; 644).

3. Apparatus according to Claim 1, **characterized in that** the damper cap (542; 642) can be latched to the guide cage (544; 644).

4. Apparatus according to Claim 1, **characterized in that** the damper cap (542; 642) is adhesively bonded or moulded onto the guide cage (544; 644).

5. Damper (310), comprising:
- a piston, a piston rod (320) and
- a damper tube (330),
the piston rod (320) being arranged axially movably in the damper tube (330), **characterized in that** the damper (310) comprises an apparatus according to one of Claims 1 to 4, the damper cap (340; 542; 642) being situated at the exit location of the piston rod (320) from the damper tube (330).

6. Damper according to one of the preceding claims, **characterized in that** the radial spacing between the damper tube and the outer edge of the at least two spacer elements (560; 660) rises at an increasing distance from the damper cap (340; 542; 642).

7. Method for producing an apparatus for protecting a damper (110; 210; 310), the method comprising the following steps:
- manufacturing of a damper cap (340; 542; 642) for closing a damper tube (330) of the damper,
- manufacturing of a guide cage (544; 644) which comprises at least two spacer elements (560, 660) which extend in the axial direction, are configured as struts, are closed by a ring at both ends and are designed to extend in the axial direction between a damper tube (330) and a protective tube (350) of the damper (310), and
- connecting of the damper cap (340; 542; 642) and the guide cage (544; 644),
the at least two spacer elements (560; 660) being configured in such a way that, upon actuation of the damper, the protective tube (350) can slide along on them in such a way that impact or rubbing of the protective tube (350) on the damper tube (330) is avoided.

8. Method according to Claim 7, **characterized in that** the damper cap (340; 542; 642) is connected to the guide cage (544; 644) via a screw connection.

9. Method according to Claim 7, **characterized in that** the damper cap (340; 542; 642) is connected to the guide cage (544; 644) via a latching connection.

10. Method according to Claim 7, **characterized in that** the damper cap (340; 542; 642) is connected to the guide cage (544; 644) via a welded connection.

11. Method according to Claim 7, **characterized in that** the damper cap (340; 542; 642) is connected to the guide cage (544; 644) via an adhesive bond.

## Revendications

1. Dispositif de protection d'un amortisseur (310), comportant
- un tube de protection (350), lequel est fixé à l'amortisseur (310),
- un capuchon d'amortisseur (340 ; 542 ; 642) pour fermer un tube d'amortisseur (330) de l'amortisseur (310), et
- au moins deux éléments d'espacement (560 ; 660), lesquels sont fixés au capuchon d'amortisseur (340 ; 542 ; 642) et s'étendent dans la direction axiale radialement à l'intérieur du tube de protection (350),
les au moins deux éléments d'espacement (560 ; 660) étant réalisés sous forme d'entretoises s'étendant dans la direction axiale, qui sont terminées aux deux extrémités par une bague et forment ainsi une cage de guidage (544 ; 644), et les au moins deux éléments d'espacement (560 ; 660) étant réalisés de telle sorte que le tube de protection (350) puisse, lors de l'actionnement de l'amortisseur, glisser sur les éléments d'espacement le long de ceux-ci, de telle sorte qu'une venue en butée ou un frottement du tube de protection (350) contre le tube d'amortisseur (330) soit empêché(e).

2. Dispositif selon la revendication 1, **caractérisé en ce que** le capuchon d'amortisseur (542 ; 642) peut être vissé sur la cage de guidage (544 ; 644).

3. Dispositif selon la revendication 1, **caractérisé en ce que** le capuchon d'amortisseur (542 ; 642) peut être encliqueté sur la cage de guidage (544 ; 644).

4. Dispositif selon la revendication 1, **caractérisé en ce que** le capuchon d'amortisseur (542 ; 642) est collé ou moulé sur la cage de guidage (544 ; 644).

5. Amortisseur (310), comportant :
- un piston, une tige de piston (320) et
- un tube d'amortisseur (330),
la tige de piston (320) étant disposée de manière mobile axialement dans le tube d'amortisseur (330),
**caractérisé en ce que** l'amortisseur (310) comporte un dispositif selon l'une quelconque des revendications 1 à 4, le capuchon d'amortisseur (340 ; 542 ; 642) se trouvant à l'emplacement de sortie de la tige de piston (320) hors du tube d'amortisseur (330).

6. Amortisseur selon l'une quelconque des revendications précédentes, **caractérisé en ce que** la distance radiale entre le tube d'amortisseur et le bord extérieur des au moins deux éléments d'espacement (560 ; 660) augmente au fur et à mesure que l'on s'éloigne du capuchon d'amortisseur (340 ; 542 ; 642).

7. Procédé de production d'un dispositif de protection d'un amortisseur (110 ; 210 ; 310), le procédé comportant les étapes suivantes :
- fabrication d'un capuchon d'amortisseur (340 ; 542 ; 642) pour fermer un tube d'amortisseur (330) de l'amortisseur,
- fabrication d'une cage de guidage (544 ; 644), laquelle comporte au moins deux éléments d'espacement (560 ; 660), réalisés sous forme d'entretoises, s'étendant dans la direction axiale, lesquels sont terminés aux deux extrémités par une bague et sont conçus pour s'étendre dans la direction axiale entre un tube d'amortisseur (330) et un tube de protection (350) de l'amortisseur (310), et
- liaison du capuchon d'amortisseur (340 ; 542 ; 642) et de la cage de guidage (544 ; 644),
les au moins deux éléments d'espacement (560 ; 660) étant réalisés de telle sorte que le tube de protection (350) puisse, lors de l'actionnement de l'amortisseur, glisser sur les éléments d'espacement le long de ceux-ci, de telle sorte qu'une venue en butée ou un frottement du tube de protection (350) contre le tube d'amortisseur (330) soit empêché(e).

8. Procédé selon la revendication 7, **caractérisé en ce que** la liaison du capuchon d'amortisseur (340 ; 542 ; 642) à la cage de guidage (544 ; 644) s'effectue par le biais d'un vissage.

9. Procédé selon la revendication 7, **caractérisé en ce que** la liaison du capuchon d'amortisseur (340 ; 542 ; 642) à la cage de guidage (544 ; 644) s'effectue par le biais d'un encliquetage.

10. Procédé selon la revendication 7, **caractérisé en ce que** la liaison du capuchon d'amortisseur (340 ; 542 ; 642) à la cage de guidage (544 ; 644) s'effectue par le biais d'un soudage.

11. Procédé selon la revendication 7, **caractérisé en ce que** la liaison du capuchon d'amortisseur (340 ; 542 ; 642) à la cage de guidage (544 ; 644) s'effectue par le biais d'un collage.
